(19) Europäisches Patentamt
European Patent Office
Office européen des brevets

(11) EP 2 579 242 A1

(12) EUROPEAN PATENT APPLICATION
published in accordance with Art. 153(4) EPC

(43) Date of publication:
10.04.2013 Bulletin 2013/15

(51) Int Cl.:
G09G 3/36 (2006.01)          G02F 1/133 (2006.01)
G09G 3/20 (2006.01)          G09G 3/34 (2006.01)

(21) Application number: 11786404.1

(22) Date of filing: 18.03.2011

(86) International application number:
PCT/JP2011/056600

(87) International publication number:
WO 2011/148704 (01.12.2011 Gazette 2011/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 28.05.2010 JP 2010123309

(71) Applicant: Sharp Kabushiki Kaisha
Osaka-shi, Osaka 545-8522 (JP)

(72) Inventors:
• TERANUMA, Osamu
Osaka-shi, Osaka 545-8522 (JP)

• INOUE, Akihiko
Osaka-shi, Osaka 545-8522 (JP)
• TAKAHASHI, Masayuki
Osaka-shi, Osaka 545-8522 (JP)

(74) Representative: Goddar, Heinz J.
Boehmert & Boehmert
Pettenkoferstrasse 20-22
80336 München (DE)

(54) LIQUID CRYSTAL DISPLAY DEVICE

(57) For the purpose of reducing cross-talk which occurs when a display image is being switched, a liquid crystal display device is provided with an image signal correction means (7) for performing a correction in which a predetermined gradient of an image signal is cut when the temperature of a liquid crystal panel (1) is lower than the temperature during normal operation.

Fig.1

EP 2 579 242 A1

# Description

## Technical Field

The present invention relates to a liquid crystal display device.

## Background art

In a liquid crystal display device that is able to display a three-dimensional, that is, 3D image, a right eye image is observed by a right eye, a left eye image is observed by a left eye, and the right eye image and the left eye image are combined into a 3D image in the brain of an observer. The observer wears active shutter glasses, which alternately block the left eye view field and the right eye view field, and can watch exactly the right eye image through the right eye and the left eye image through the left yet, whereby the observer can recognized exactly the 3D image.

In the liquid crystal display device, occurrence of a so-called crosstalk is a Problem, in which the right eye image is observed by the left eye; the left eye image is observed by the right eye; whereby the image is disturbed. The crosstalk occurs thanks to various causes: a slow change speed (response characteristic) in light transmittance of a liquid crystal panel of the liquid crystal display device is one of major causes. A response speed of the liquid crystal display device considerably depends on temperature, that is, the lower the temperature is, the slower the response speed is. In other words, in the liquid crystal display device, when the temperature of the liquid crystal panel is low, the crosstalk easily occurs (e.g, see a patent document JP-A-2010-91782).

On the other hand, in a case where a gradation of the right eye image and a gradation of the left eye image are equal or near to each other, a change amount in the light transmittance of the liquid crystal panel is small, accordingly, even if the response speed of the liquid crystal panel is slow, a light amount difference recognized thanks to deficient response is slight. In other words, even if the temperature of the liquid crystal panel is low (even if the response speed is slow), in the case where the gradation of the right eye image and the gradation of the left eye image are equal or near to each other, the crosstalk is unlikely to occur.

## Citation List

## Patent Literature

PLT1: JP-A-2010-91782

## Summary of Invention

## Technical Problem

However, in the liquid crystal display device, in a case where a gradation difference between the right eye image (previous image) and the left eye image (current image) is large, if the temperature of the liquid crystal panel is low, the response speed is low (deficient response) and it is impossible to change to a light transmittance that is necessary for the liquid crystal panel to display the gradation of the current image. Because of the deficient response of the liquid crystal panel and the visible large light amount difference, an influence of the previous image easily appears and a crosstalk easily occurs.

Because of this, it is an object of the present invention to provide a liquid crystal display device that is able to reduce a crosstalk which occurs when a display image is switched in a state in which temperature of a liquid crystal panel is low.

## Solution to Problem

To achieve the above object, a liquid crystal display device according to the present invention includes: a backlight unit that includes a light source; a liquid crystal panel that displays an image on a front surface by transmitting/blocking light from the backlight unit; an image process unit that generates an image signal which is displayed on the liquid crystal panel; and a liquid crystal panel drive unit that based on the image information, generates a liquid crystal drive signal which controls switching of transmission/blocking performed by the liquid crystal panel; the liquid crystal display device comprises a panel temperature obtaining unit that obtains a temperature of the liquid crystal pane; and the liquid crystal display device comprises an image signal correction unit that performs a correction to cut a predetermined gradation of the image signal when the temperature of the liquid crystal panel is lower than a temperature during a steady-state operation time of the liquid crystal display device.

According to this structure, during a low temperature time when the response speed of the liquid crystal panel is slow, it is possible to make the gradation difference small between the images displayed on the liquid crystal panel. According to this, a change amount in the light transmittance that is required by the liquid crystal panel becomes small, and it is possible to alleviate the occurrence of a crosstalk. In the meantime, here, the steady-state operation means that the liquid crystal display device operates for a sufficiently long time and the response speed of the liquid crystal panel is fast.

In the above structure, the image signal correction unit may perform a correction to cut a high gradation of the image signal and perform a correction to cut a low gradation. Here, in accordance with the temperature of the liquid crystal panel or the temperature of the liquid crystal panel and a gradation bias of the image signal, it may be determined whether to cut the gradation, the low gradation or both gradations of the image signal.

In the above structure, the image signal correction unit may correct the image signal more considerably when the temperature of the liquid crystal panel is lower.

In the above structure, the image signal correction unit may perform a correction of the image signal by means of a calculation process based on a calculation formula given in advance and the temperature of the liquid crystal panel. Besides, the liquid crystal display device may include a gradation correction database that includes a gradation correction table, in which a correction amount of the image signal is prepared, for every temperature of the liquid crystal panel; wherein the image signal correction unit may call a gradation correction table corresponding to the temperature of the liquid crystal panel from the gradation correction database, refer to the gradation correction table, and correct the image signal.

In the above structure, the liquid crystal display device may include a control unit that performs control to increase or to decrease brightness of the backlight unit when the image signal is corrected by the image signal correction unit.

**Advantageous Effects of Invention**

According to the present invention, in a liquid crystal display device that displays an image successively in time division, by performing a correction to cut a predetermined gradation of an image signal, it is possible to make a gradation (brightness) difference small between a previous display image and a current display image and reduce a crosstalk recognized by an observer.

**Brief Description of Drawings**

[Fig. 1] is a block diagram of a liquid crystal display device according to the present invention.

[Fig. 2A] is a right eye image and a left eye image that are observed through active shutter glasses when a response speed of a liquid crystal display device is fast.

[Fig. 2B] is a combined image obtained by combining the images in Fig. 2A.

[Fig. 3A] is a right eye image and a left eye image that are observed through active shutter glasses when a response speed of a liquid crystal display device is slow.

[Fig. 3B] is a combined image obtained by combining the images in Fig. 3A.

[Fig. 4] is a graph showing an example of a gradation correction table that is used for a liquid crystal display device according to the present invention.

[Fig. 5A] is a graph showing a crosstalk when an image is displayed without performing a correction of a frame image signal in a state in which a temperature of a liquid crystal panel is low.

[Fig. 5B] is a graph showing a crosstalk when a frame image signal is corrected by means of the gradation correction table shown in Fig. 4.

[Fig. 6] is a graph showing another example of a gradation correction table that is used for a liquid crystal display device according to the present invention.

[Fig. 7] is a graph showing still another example of a gradation correction table that is used for a liquid crystal display device according to the present invention.

[Fig. 8] is a graph showing still another example of a gradation correction table that is used for a liquid crystal display device according to the present invention.

**Description, of Embodiments**

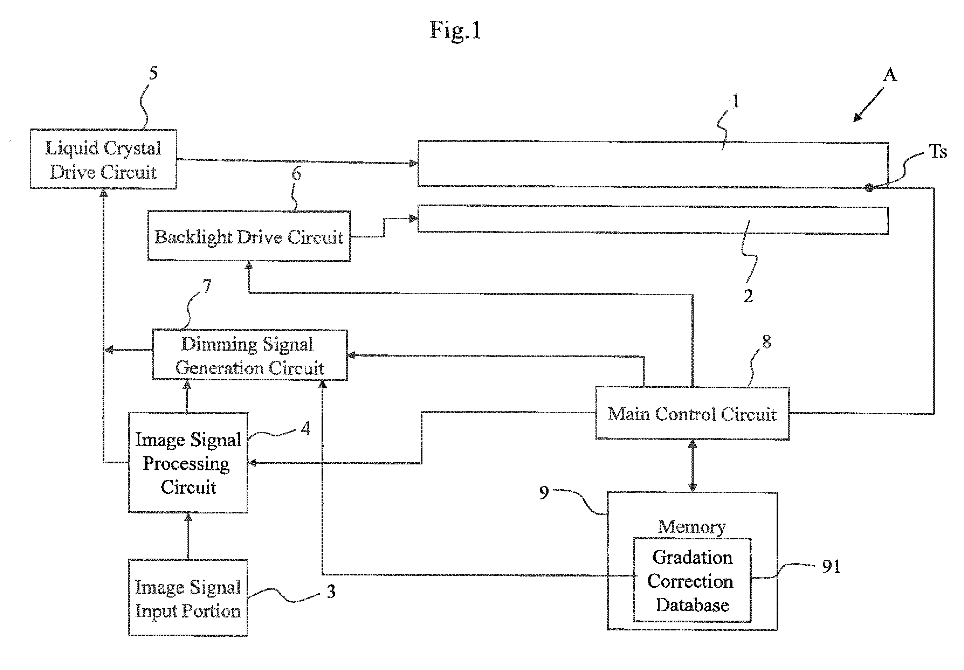

Hereinafter, embodiments of the present invention are described with reference to the drawings. Fig. 1 is a block diagram of a liquid crystal display device according to the present invention. As shown in Fig. 1, a liquid crystal display device A is a liquid crystal display device that is able to display a 3D image and includes: a liquid crystal panel 1; a backlight unit 2; an image signal input portion 3; an image process circuit 4; a liquid crystal drive circuit 5; a backlight unit drive circuit 6; an image signal correction circuit 7; a main control circuit 8; and a memory 9.

In the liquid crystal panel 1, liquid crystal is injected between glass boards that are disposed parallel with each other. A transparent electrode formed of ITO (Indium Tin Oxide) and the like is disposed on the glass board, and by applying a voltage to the liquid crystal by using the transparent electrode, the penetration ratio of light input into the liquid crystal panel 1 is adjusted. The liquid crystal panel I adjusts the light transmittance to light from the backlight unit disposed on a rear surface and displays an image on a front surface.

The backlight unit 2 of the liquid crystal display device A is an illumination device that is disposed on the rear surface of the liquid crystal panel 1 for displaying an image and includes, as a light source, a plurality of white LEDs or a plurality of sets of LEDs having three colors of R, G and B (hereinafter, simply called an LED). Here, in the liquid crystal display device A, the backlight unit 2 is of direct type and the LEDs are disposed two-dimensionally on a surface that opposes the liquid crystal panel 1. Besides, as the backlight unit, besides the direct type, it is also possible to use an edge light type.

The image signal input portion 3 is interface that inputs an image signal. Hereinafter, the image signal input via the image signal input portion 3 is called an input image signal. The image process circuit 4, based on the input image signal, generates a frame image signal and transmits the frame image signal to the liquid crystal drive circuit 5. In the meantime, here, the frame image signal is a signal of an image brightness (pixel gradation) of each of the three primary colors (R, G, B) of each pixel that composes a one-frame image of a moving image.

Besides, in a case where a 3D image is displayed, the image process circuit 4, based on the input image signal, generates a right eye image observed by the right eye of an observer and a left eye image observed by the left eye of the observer. In other words, the image process circuit 4 separates and generates the right eye image and the left eye image from the image that is input in a 3D image format, or generates anew the right eye image and the left eye image for every one frame from the image signal input of a usual format. And, the image process circuit 4 transmits each of the right eye image and the left eye image as a one-frame image to the liquid crystal drive circuit 5. Here, one-frame image signals of the right eye image and the left eye image are alternately successively transmitted to the liquid crystal drive circuit 5. Here, in a case where the response speed of the liquid crystal panel 1 is slow, the frame image signal generated by the image process circuit 4 is sent to the image signal correction circuit 7, corrected, thereafter, sent to the liquid crystal drive circuit 5. Details of the image signal correction circuit 7 are described later.

The liquid crystal drive circuit 5 is a circuit that, based on the frame image signal successively sent from the image process circuit 4 or from the image signal correction circuit 7 at constant periods, displays successively a one-frame image that corresponds to the frame image signal on the liquid crystal panel 1. specifically describing, the liquid crystal drive circuit 5 supplies a voltage, which corresponds to a pixel gradation contained in the frame image signal, to the transparent electrode for each pixel that is disposed in the liquid crystal panel 1. According to this, the penetration ratio of light is decided for every pixel of the liquid crystal panel 1; the light from the backlight unit 2 passes through, whereby the image is displayed on the front surface of the liquid crystal panel 1. In the case where the 3D image is displayed on the liquid crystal panel 1, the right eye image and the left eye image are alternately displayed.

The backlight unit drive circuit 6 is a circuit that adjusts brightness of the LED of the backlight unit 2. The backlight unit drive circuit 6 supplies a backlight unit turning-on current to the LED in accordance with a control signal from the main control circuit 6. The backlight unit turning-on current is a pulse current. The LED, that is, the light source of the backlight unit 2, repeats ON/OFF at a speed, which is unrecognizable with human eyes, in accordance with a turning-on duty ratio of the pulse current.

The image signal correction circuit 7 is a circuit that based on temperature information of the liquid crystal panel 1 from the main control circuit 8, corrects the frame image signal from the image process circuit 4, transmits the frame image signal to the liquid crystal drive circuit 5, and operates as an image signal correction unit. More specifically describing, the image signal correction circuit 7 corrects the gradation of the frame image signal in accordance with information that indicates a relationship between the temperature and gradation stored in the memory 9 and with the temperature information of the liquid crystal panel 1 sent from the main control circuit 8. Here, the memory 9 is independent of the main control circuit 8, but may be a portion of the main control circuit 8. As the memory 9, there are a read only memory ROM, a readable writable RAM, a flash memory and the like. Besides, an entire portion or a part of the memory 9 may separable to outside.

The main control circuit 8 is a circuit that comprehensively controls the liquid crystal display device A. The main control circuit 8 includes processing units such as an MPU and the like. Besides, the main control circuit 8 is connected to a temperature sensor Ts that measures the temperature information of the liquid crystal panel 1, and obtains the temperature of the liquid crystal panel 1 based on the information that is sent from the temperature sensor Ts. Further, the main control circuit 8 also controls a power supply circuit (not shown) that supplies electricity to the liquid crystal drive circuit 3; the image process circuit 4; the liquid crystal drive circuit 5; the backlight unit drive circuit 6; the image signal correction circuit 7 and the like. Here, the temperature sensor Ts may not be in direct contact with the liquid crystal panel 1, but may be disposed near it. As a mount position of the temperature sensor Ts, for example, the temperature sensor Ts is mountable on a board (not shown) of the backlight unit 2.

Next, the crosstalk that occurs when displaying the 3D image by means of the liquid crystal display device A is described. In the case where the 3D image is displayed by means of the liquid crystal display device A, it is necessary to exactly input the right eye image into the right eye and the left eye image into the left eye. Because of this, the observer observes the liquid crystal display device A wearing active shutter glasses that shut off alternately the right eye view field and the left eye view field. The liquid crystal display device A displays the right eye image when the left eye view field is shut off and displays the left eye image when the right eye view field is shut off in accordance with the shut-off timing of the active shutter glasses, thereby inputting the right eye image into the right eye and the left eye image into the left eye.

In a case where a moving 3D image (moving image) is displayed by means of the liquid crystal display device A, the right eye image and the left eye image are necessary, and frames which are at least double in number are necessary. In other words, a switching interval of the transmittance of the liquid crystal panel 1 is short. In the case where the 3D image is displayed by means of the liquid crystal display device A, if the response speed of the liquid crystal panel 1 is slow, a change of the transmittance of the liquid crystal panel 1 does not follow the turning-on of the backlight unit 2 and a residual image of a previous frame is displayed, which leads to the crosstalk.

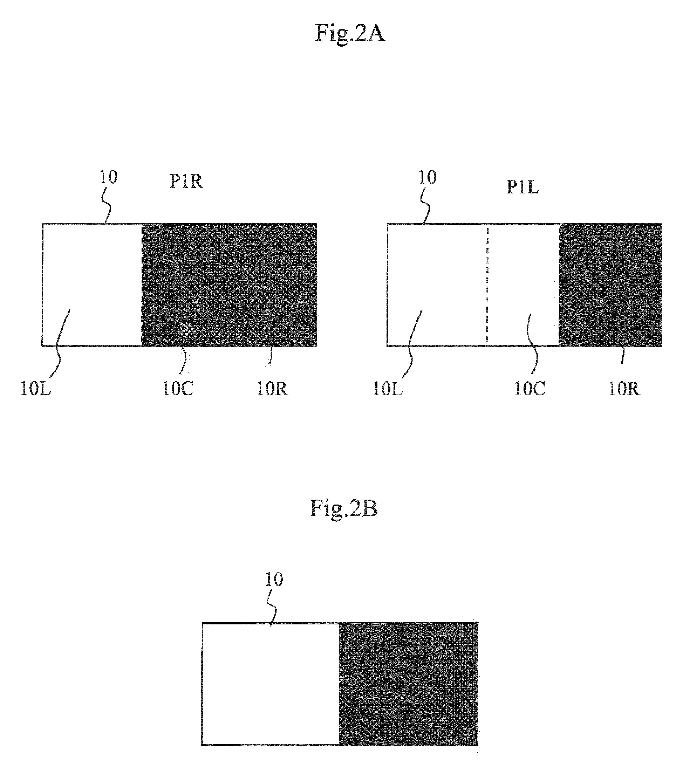

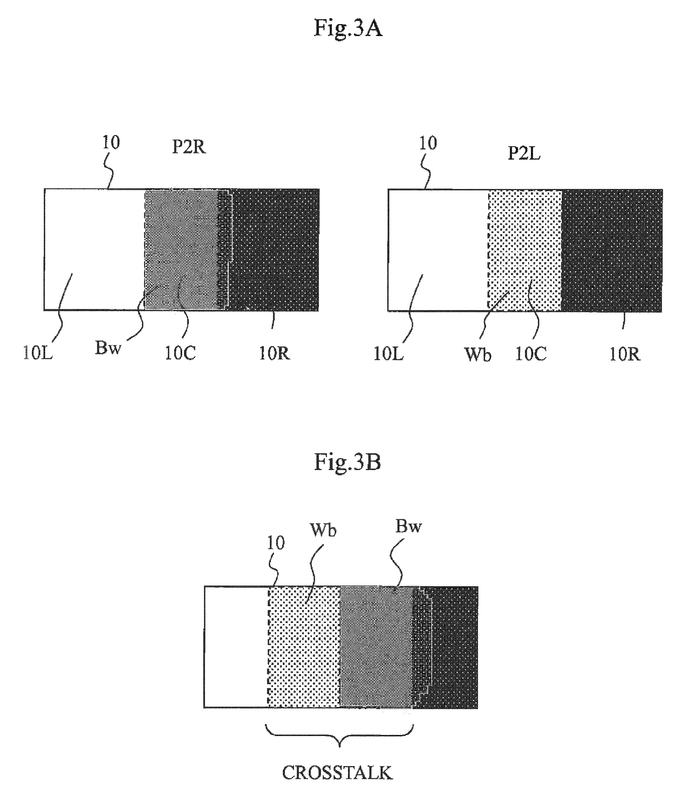

The crosstalk is described with reference to drawings. Fig. 2A is the right eye image and the left eye image that are observed through the active shutter glasses when the response speed of the liquid crystal panel is fast, and Fig. 2B is a combined image obtained by combining the images in Fig. 2A. Fig. 3A is the right eye image and the left eye image that are observed through the active shutter glasses when the response speed of the liquid crystal panel is slow, and Fig. 3B is a combined image obtained by combining the images in Fig. 3A. Here, in Fig. 2 and Fig. 3, for the sake of convenience, an image obtained by combining a white color (the gradation 255: the light transmittance 100%) and a black color (the gradation 0: the light transmittance 0%) is described.

First, a case where no crosstalk occurs is described. A right eye image P1R and a left eye image P1L are displayed alternately on the front surface of the liquid crystal panel 1. The right eye image P1R and the left eye image P1L are displayed on an image display region 10 of the liquid crystal panel 1; in Fig. 2B, the image display region 10, the right eye image P1R and the left eye image P1L are laid on one another and displayed. Besides, as shown in Fig. 2A, the image display region 10 is described assuming that the image display region 10 includes from left: a left region 10L; a central region 10C; a right region 10R.

As shown in Fig. 2A, the right eye image P1R is an image in which the left region 10L has a white color (the gradation 255); the central region 10C and the right region 10R have a black color (the gradation 0). The left eye image P1L is an image in which the left region 10L and the central region 10C have a white color (the gradation 255); and the right region 10R has a black color (the gradation 0). At this time, even if the right eye image P1R and the left eye image P1L are switched, the liquid crystal display panel 1 displays an image in which the left region 10L has always the white color (the gradation 100); and the right region 10R has always the black color (the gradation 0). On the other hand, in the central region 10C, when the right eye image P1R is displayed, the black color (the gradation 0) image is displayed, while when the left eye image P1L is displayed, the white color (the gradation 255) is displayed.

In the right region 10R and the left region 10L, the gradation of the image, which is displayed by means of the right eye image P1 and the left eye image P1L, does not change, it is not necessary to change the light transmittance of the liquid crystal panel 1; and irrespective of a response characteristic, it is possible to keep constant display quality. On the other hand, the central region 10C displays the black color (the gradation 0) in the case of the right eye image P1R and displays the white color image in the case of the left eye image P1L. In other words, in the central region 10C, when the right eye image P1R and the left eye image P1L are switched, the light transmittance also changes. In a case where the response time of the liquid crystal panel 1 is fast, as shown in Fig. 2A, it is possible to exactly display the white color or the black color in the central region 10C. According to this, when the two images are combined in the brain of the observer, as shown in Fig. 2B, an image is combined, which has a boundary line between the white color and the black color at the center of the image display region 10. In the meantime, here, for the sake of convenience, Fig. 2 does not show a 3D image: however, as a matter of fact, a 3D image is recognized.

Next, a case where the response speed of the liquid crystal panel 1 is slow is described. Fig. 3A shows a right eye image P2R and a left eye image P2L. Like in Fig. 2A, the image display region 10 of the liquid crystal panel 1 is laid and displayed, and the frame image signal sent to the liquid crystal drive circuit 5 is the same as the frame image signal of the right eye image P1R and the left eye image P1L that are shown in Fig. 2A.

In Fig. 3A, the image displayed in the left region 10L of the image display region 10 has a white color (the gradation 255) in both cases where the right eye image P2R and the left eye image P2L are displayed, while in the right region 10R, the image has a black color (the gradation 0) in both cases. The image which has always the same gradation is displayed in the left region 10L and the right region 10R, accordingly, there is no influence of the response speed of the liquid crystal panel 1 or very small. On the other hand, the central region 10C has the black color when the right eye image is displayed and has the white color when the left eye image is displayed (the same as in Fig. 2A), and is influenced by the response speed of the liquid cryst panel 1. In other words, if the response speed of the liquid crystal panel 1 is slow, the light transmittance of the liquid crystal panel 1 cannot sufficiently change when the image is switched.

In the case of the right eye image P2R in Fig. 3A, the response speed of the liquid crystal panel 1 is slow, accordingly, as the image that is displayed in the right region 10R and the left region 10L that are subjected to a small influence of the response speed, the image in accordance with the trams image signal is displayed. However, in the case of the image displayed in the central region 10C, the change of the light transmittance of the liquid crystal panel 1 does not follow the turning-on of the backlight unit 2. In other words, in the central region 10C, the color changes from the white color (the light transmittance 100%) in the case of the left eye image P2L that is the previous image to the black color (the light transmittance 0%) in the case of the right eye image P2R that is the current image; however, the change (response) of the light transmittance of the liquid crystal panel 1 does not follow, whereby the color does not become the black color but becomes a dark gray color (hereinafter, called a whitish black color and indicated by Bw in the figure). Likewise, also in the case of the left eye image P2L, the image displayed in the central region 10C does not become the white color but becomes a light gray color (hereinafter, called a blackish white color and indicated by Wb in the figure).

If these right eye image P2R and left eye image P2L are observed by the right eye and the left eye, respectively, and combined with each other, as shown in Fig. 3B, images having the blackish white color Wb and the whitish black color Bw appear on the left and right sides with respect to a central line that is originally the boundary, whereby the so-called crosstalk occurs. As described above, the crosstalk easily appears especially at a contour of an image, whereby the image looks doubly or triply and the contour line looks blurred. Here, because of a characteristic of the human eyes, in the combined image, the whitish black color Bw present in the black color looks more conspicuously than the blackish white color Wb present in the white color.

Because of this, in the liquid crystal display device A, to alleviate the crosstalk when the temperature of the liquid crystal panel 1 is low and the response speed is slow, the frame image signal generated by the image process circuit 4 is corrected by the image signal correction circuit 7. Based on the temperature information of the liquid crystal panel 1, the main control circuit 8 determines whether to correct the frame image signal generated by the image process circuit 4 or not. If it is determined that the temperature of the liquid crystal panel 1 is high and the correction is unnecessary, the main control circuit 8 sends an instruction to make the image process circuit 4 transmit the frame image signal to the liquid crystal drive circuit 5. On the other hand, if it is determined that the correction is necessary, the main control circuit 8 sends an instruction to make the image process circuit 4 transmit the frame image signal to the image signal correction circuit 7, and makes the image signal correction circuit 7 correct the frame image signal.

The correction of the frame image signal by the image signal correction circuit 7 is described. The image signal correction circuit 7 obtains the temperature information of the liquid crystal panel 1 from the main drive circuit 8. The image signal correction circuit 7 gains access to the memory 9 to call a gradation correction table suitable for the temperature of the liquid crystal panel 1 from a gradation correction database 91 that is stored in the memory 9. And, the image signal correction circuit 7 refers to the gradation correction table, corrects gradation information of the sent frame image signal, and the corrected frame signal is sent to the liquid crystal drive circuit 5. Here, in the gradation correction database 91, the temperature of the liquid crystal panel 1 is divided into a plurality of stages; and for every stage, a plurality of the gradation correction tables having different correction degrees are prepared. The lower the temperature is, the more considerable correction the gradation correction table allows.

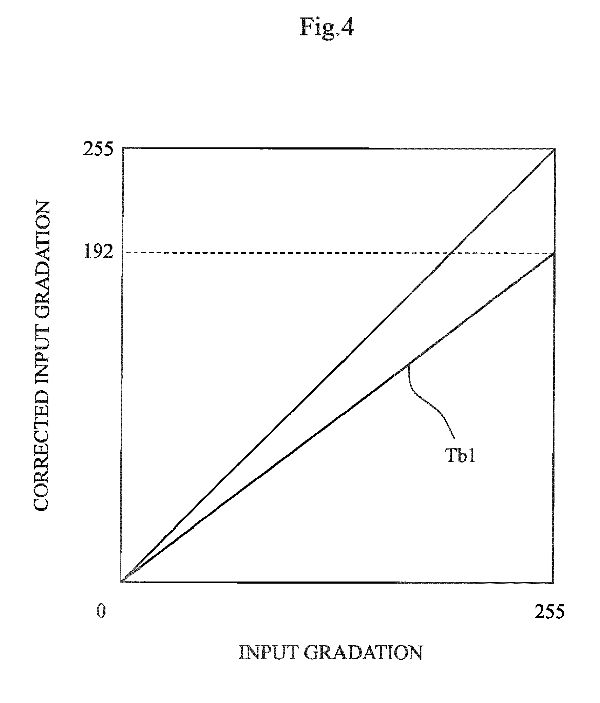

The correction of the frame image signal is described with reference to a drawing. Fig. 4 is a graph showing an example of the gradation correction table that is used for the liquid crystal display device according to the present invention. In Fig. 4, a horizontal axis is the gradation (hereinafter, called an input gradation) of the frame image signal generated by the image process circuit 4. Besides, a vertical axis is the gradation (hereinafter, called a corrected input gradation) of the frame image signal after correction. Here, in the liquid crystal display device A, the image is represented by 8-bit gradations (256 gradations).

As described above, it is known that when the images having gradations away from each other are rewritten, the crosstalk easily occurs. Especially, a whitish black color (Bw in Fig. 3B) is easily recognizable by the observer. As one of methods for alleviating the occurrence of the whitish black color, there is a method for cutting a high gradation component of the image. Accordingly, as shown in Fig. 4, by using a gradation correction table Tb1 that is chiefly used to cut a high gradation side, an input gradation is corrected to a corrected input gradation.

The image signal correction circuit 7 refer to the gradation correction table Tb1 based on the input gradation of the frame image signal and decides the corrected input gradation. This correction cuts a high gradation of the input gradation of the frame image signal. For example, the input gradation of the frame image signal is 255, the corrected input gradation is corrected to 192. In other words, when the input gradation is 0 to 255, the gradation correction table Tb1 shown in Fig. 4 is used such that the corrected input gradation becomes 0 to 192. Besides, as shown in Fig. 4, the correction is converted linearly.

The image signal correction circuit 7 applies the correction to the sent frame image signal to generate and send a new frame image signal to the liquid crystal drive circuit 5. Based on the frame image signal sent from the image signal correction circuit 7, the liquid crystal drive circuit 5 sends a drive signal to the liquid crystal panel 1, thereby driving the liquid crystal panel 1. The image displayed on the liquid crystal panel 1 based on the corrected frame image signal is an image in which the high gradation is chiefly cut. As described above, a difference between the minimum gradation and the maximum gradation of the original frame image signal is 255; however, by performing the correction, the difference between the minimum gradation and the maximum gradation after the correction becomes 192.

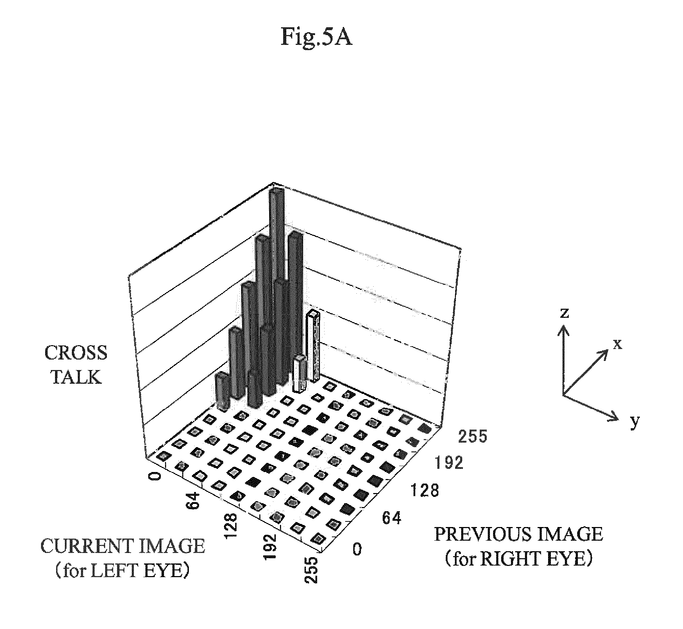

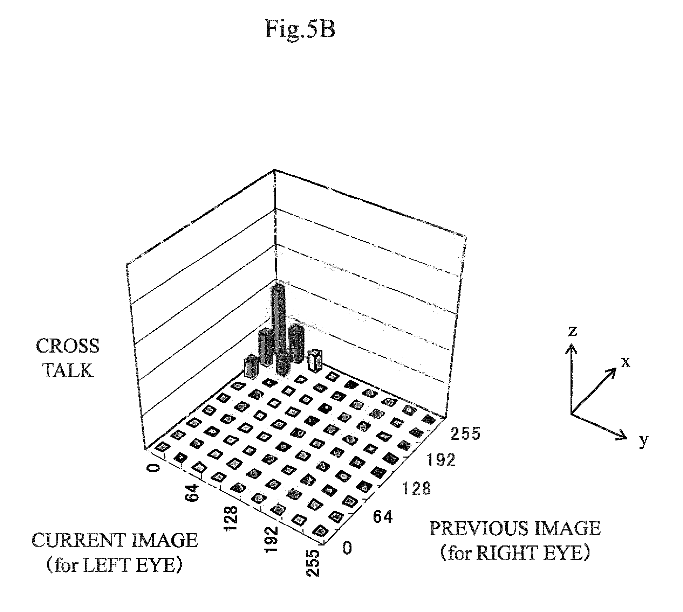

A change of the crosstalk of an output image due to correcting the flame image signal described above is described with reference to drawings. Fig. 5A is a graph showing the crosstalk when the image is displayed without performing the correction of the frame image signal in a state in which the temperature of the liquid crystal panel is low, while Fig. 5B is a graph showing the crosstalk when the frame image signal is corrected by means of the gradation correction table shown in Fig. 4. Figs. 5A, B show occurrence of the crosstalk in an arbitrary region (here, the central region 10C of the image display region 10) of the image display region 10 of the liquid crystal panel 1. Here, in the following description, an image which is displayed at present is called a current image, and an image which is displayed before the current image is called a previous image.

Figs. 5A, B show a three-axis graph. In Fig. 5A and Fig. 5B, an x axis is an input gradation of a previous image, a y axis is an input gradation of a current image, and a z axis is a crosstalk amount. As shown in Fig. 5A, in a case where a high gradation (192 or higher) of the previous image is displayed; thereafter, a low gradation (64 or lower) of the current image is displayed, the crosstalk considerably appears in the central region 10C. On the other hand, as shown in Fig. 5B, by performing the high gradation cut correction of the frame image signal, an occurrence amount of the crosstalk is reduced.

The difference between the minimum gradation and the maximum gradation of the original frame image signal is 255; however, by performing the correction to cut the high gradation, the difference between the minimum gradation and the maximum gradation after the correction becomes 192. In other words, by performing the correction, contrast of the image is alleviated, and especially, there is an effect to alleviate visibility of the crosstalk in the case where the previous image has a high gradation and the current image has a low gradation. Besides, by decreasing the maximum gradation to an intermediate gradation level, an overshoot effect is easily obtained, and there is a crosstalk reduction effect due to improvement of the response speed.

When the frame image signal is corrected, the brightness of the image displayed on the liquid crystal panel 1 declines. To alleviate the brightness decline, when the high gradation is cut, brightness of the backlight unit 2 may be increased. And, information of that the image signal correction circuit 7 cuts the high gradation is returned to the main control circuit 8. The main control circuit 8 decides a brightness value of the backlight unit 2 by means of a light adjustment circuit (not shown) included inside, superposes the brightness value on the control signal, and sends the brightness value to the backlight unit drive circuit 6. Brightness control by the backlight unit drive circuit 6 may be performed by: a PWM control method that adjusts a frequency of light emission timing of the backlight unit 2; a method for changing an electric-current level supplied to the backlight unit 2; or a combined method of these methods.

The crosstalk considerably depends on the response speed of the liquid crystal panel 1 as described above. When changing and displaying the image at a high speed like in performing a 3D display by means of the liquid crystal display device A, thanks to the image contrast reduction by the gradation cut and the use of an intermediate gradation region, it is possible to compensate for a delay in the response speed of the liquid crystal panel 1 and alleviate the occurrence of the crosstalk. By using this characteristic, in the above embodiments, the correction for cutting the high gradation is applied to the display image; however, by cutting the low gradation, it is possible to obtain the same effect.

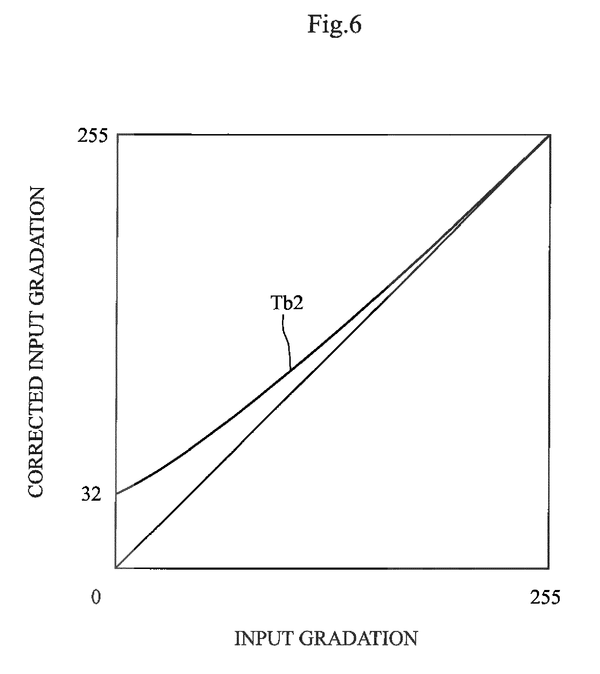

Next, another example of the correction of the frame image signal in the liquid crystal display device according to the present invention is described. Fig. 6 is a graph showing an example of the gradation correction table that is used for the liquid crystal display device according to the present invention. The gradation correction table shown in Fig. 6 is a low gradation correction table Tb2 that is used to cut a low gradation. The low gradation correction table Tb2 shown in Fig. 6, like the high gradation correction table Tb1 in Fig.4, is a gradation correction table that is used when the temperature of the liquid crystal panel 1 is low and the response speed is slow.

A method for correcting an input to an corrected input by using the gradation correction table Tb2 is as follows. The image signal correction circuit 7 refers to the gradation correction table Tb2 based on the input of the frame image signal and decides the corrected input. This correction is a correction that shifts the low gradation of the frame image signal to the high gradation side. For example, in a case where the input gradation L of the frame image signal is 0 and the correction is not performed, the input is performed at L=0; however, by performing the correction by using the gradation correction table Tb2, the gradation L of the corrected input is corrected to 32. The image signal correction circuit 7 applies the correction to the sent frame image signal to generate and send a new frame image signal to the liquid crystal drive circuit 5. Based on the frame image signal sent from the image signal correction circuit 7, the liquid crystal drive circuit 5 sends a drive signal to the liquid crystal panel 1, thereby driving the liquid crystal panel 1. The image displayed on the liquid crystal panel 1 based on the corrected frame image signal is an image in which the low gradation is cut. Here, when cutting the low gradation, to alleviate the image of the low gradation appearing (bright black phenomenon), the backlight brightness may be decreased.

The high gradation correction table Tb2 shown in Fig. 6 is non-linear. Irrespective of the presence of correction, decision of the table Tb2 is performed such that a gamma value of the image displayed on the liquid crystal panel 1 does not changes, accordingly, the table Tb2 is non-linear. Here, the high gradation correction table Tb1 in Fig. 4 also is a gradation correction table that is decided such that the gamma value of the image after the correction displayed on the liquid crystal panel 1 and the gamma value of the image before the correction do not differ from each other. In other words, the image displayed on the liquid crystal panel 1 has the constant gamma value, accordingly, the image is unlikely to change considerably in the presence of strong correction, and is unlikely to give an uncomfortable feeling to the observer.

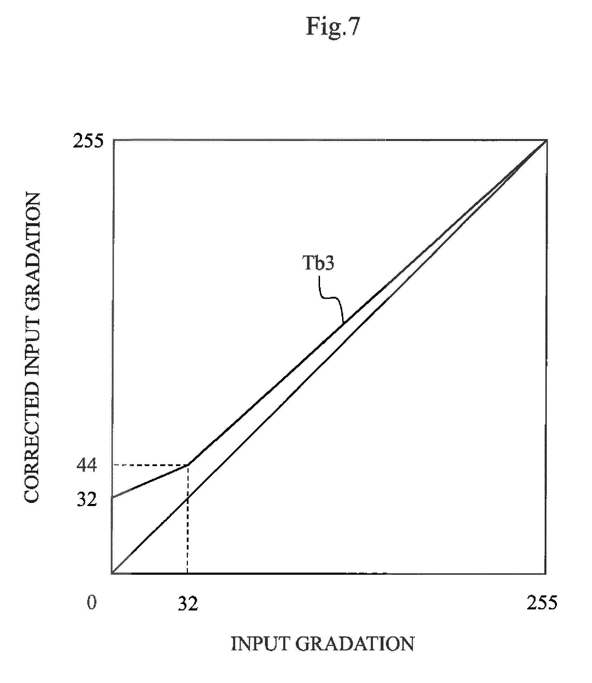

Here, as shown in Fig. 7, a linear (polygonal line type) low gradation correction table Tb3, in which a gradient changes at a value (in the present example, an input of 32) on the low gradation side, may be used. In other words, when the gradation is 0, the correction is performed to obtain 32; when the input is 32, the correction is performed to obtain 44. When the input has a value between 0 and 32, the corrected input is decided to linearly change between 32 and 44. In a case where the input exceeds 32, the corrected input is decided to change linearly between 44 and 255. In the case where the correction is performed as described above, the input gradation and the corrected input gradation are in a linear relationship, accordingly, it is possible to make the low gradation correction table Tb3 small. In a case where the corrected input is decided by using the low gradation correction table Tb3, the image displayed on the liquid crystal panel 1 does not become an image that has exactly the same gamma value; however, the correction table does not considerably deviate, accordingly, the gamma value also does not considerably deviate.

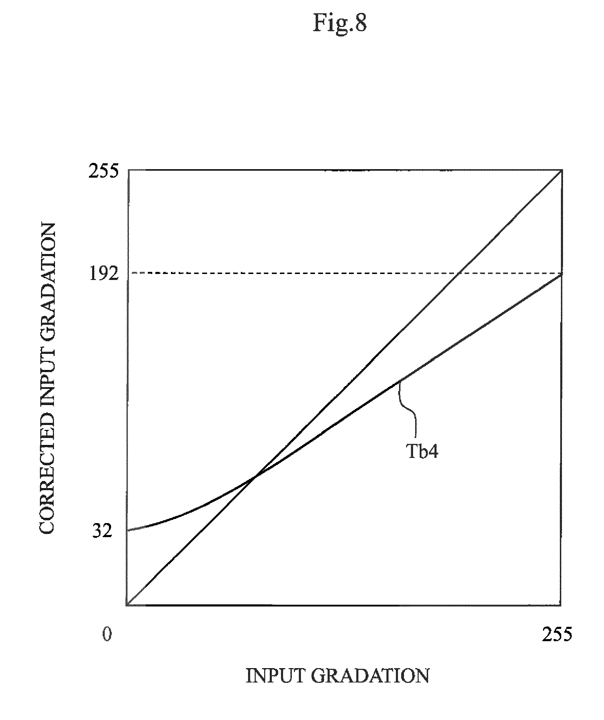

Further, a table such as a gradation correction table Tb4 shown in Fig. 8 or the like may be used, which is used to cut the low gradation (32 or smaller in the gradation correction table Tb4 in Fig. 8) and the high gradation (192 or higher in the gradation correction table Tb4 in Fig. 8) of the input. As described above, by setting the gradation correction table, it is possible to apply both corrections of the low gradation cut and the high gradation cut to the frame image signal, and it is possible to effectively alleviate the crosstalk due to the response speed of the liquid crystal panel 1. Here, the gradation correction table Tb4 also is decided such that the gamma value of the image displayed on the liquid crystal panel 1 does not change before and after the correction.

Besides, it may be made possible to select the correction (Tb1) to cut the high gradation, the correction (Tb2, Tb3) to cut the low gradation, and the correction (Tb4) to cut both in accordance with the temperature of the liquid crystal panel 1.

Another example of the gradation correction performed in the liquid crystal display device according to the present invention is described . In the examples described above, the table is used as a method for correcting the gradation of the frame image signal; however, the correction gradation may be decided by means of a calculation formula. An example of the calculation formula for correcting the gradation is shown. Here, in the following formula, the gradation of the frame image signal has 8 bits; however, this is not limiting. Besides, even in the case where the calculation formula is used, irrespective of the presence of correction, the correction is performed such that the gamma value of the image displayed on the liquid crystal panel 1 does not change.

If the low gradation equal to or smaller than a of the input gradation and the high gradation equal to or larger than b of the input gradation of the frame image signal are cut, an output La at the gradation a and an output Lb at the gradation b are as follows:

$$La = (a/255) \wedge \gamma$$

$$Lb = (b/255) \wedge \gamma$$

where $\gamma$ is a gamma value. Besides, "^" is a symbol that represents power. Besides, La, Lb are each a normalized output value.

And, an output value Lab after the correction corresponding to an input gradation I1 wh the high gradation and the low gradation are cut is as follows:

$$Lab = (I1/255) \wedge \gamma \times (Lb-La) + La$$

where Lab is a normalized output value.

And, based on this output value Lab, a corrected input gradation I2 after the correction, is calculated. Irrespective of the presence of correction, the gamma value does not change, accordingly,

$$I2 = 255 \times Lab \wedge (1/\gamma)$$

is obtained. By using the above formulas, it is possible to calculate the corrected input gradation after the correction is performed to cut the low gradation equal to or smaller than a and the high gradation equal to or larger than b.

For example, in a case where the high gradation shown in Fig. 4 is corrected, a is set at 0, and in a case where the low gradation shown in Fig. 6 is corrected, b is set at 255. By changing the gradation values a and b to be cut in accordance with the temperature of the liquid crystal panel 1 when necessary, it is possible to perform the gradation cut correction by means of the calculation at every temperature of the liquid crystal panel 1. Here, the calculation formulas may be prepared in the image signal correction circuit 7, or the image signal correction circuit 7 may call the calculation formulas stored in the memory 9. Besides, likewise, the values a and b may be prepared in the image signal correction circuit 7 or stored in the memory 9. Besides, a structure may be employed, in which the calculation formulas for the values a and b different at every temperature are prepared and used.

By using the above calculation formulas, the image displayed on the liquid crystal panel 1 has the constant gamma value, accordingly, the image is unlikely to change in the presence of strong correction, and is unlikely to give an uncomfortable feeling to the observer. Here, the above calculation formulas are examples and these are not limiting.

The example described above is an example of a case where the temperature of the liquid crystal panel 1 expected in the liquid crystal display device A is lowest. Here, showing an example in which the temperature of the liquid crystal panel 1 is lower than the temperature during a steady-state operation time of the liquid crystal display device A, it is immediately after a power supply of the liquid crystal display device A (cold start time) is turned on. Here, the steady-state operation means that the liquid crystal display device A operates for a sufficiently long time and the response speed of the liquid crystal panel 1 is fast. It is preferable that the temperature of the liquid crystal panel 1 is always obtained and the gradation correction table is changed as the temperature changes; however, this is not limiting: only one gradation correction table is prepared and the corrected input gradation may be decided by using only the gradation correction table at a time of the correction or may be decided by combining the gradation correction table and a calculation formula prepared separately.

The gradation correction database 91 may be provided with a gradation correction table for every temperature of the liquid crystal panel 1. Besides, in the gradation correction database 91, the temperature of the liquid crystal panel 1 may be divided into a plurality of sections; and a gradation correction table may be prepared for every section. Further, instead of the gradation correction table, a calculation formula for correcting the gradation may be prepared for the temperature or for every section of the temperature, and the image signal correction circuit 7 may perform the correction of the frame image signal based on the correction formula.

Here, the gradation correction becomes smaller as the temperature of the liquid crystal panel becomes higher. For example, in a case where the gradation correction database 91 has a gradation correction table for cutting the high gradation, the image signal correction circuit 7 refers to: a table (the gradation correction table Tb1 in Fig. 4) for applying the correction to the input gradation of 0 to 255 to obtain 0 to 192 when the temperature of the liquid crystal panel 1 is 25°C or lower; a table for performing the correction to obtain 0 to 224 at temperatures of 25°C to 30°C; a table for performing the correction to obtain 0 to 240 at temperatures of 30°C to 35°C. Here, in a case where the temperature of the liquid crystal panel 1 is 35°C or higher, the correction is not performed.

Besides, a bias of the gradation of the frame image signal generated by the image process circuit 4 may be detected, and it may be determined in accordance with the bias whether to perform the correction for cutting the high gradation or to perform the correction for cutting the low gradation. For example, in a case where the entire image displayed on the liquid crystal panel 1 does not contain the low gradation very much, the correction for cutting the low gradation side may be performed, while in a case where the entire image does not contain the high gradation very much, the correction for cutting the high gradation side may be performed.

As described above, the image signal correction circuit 7 or the main control circuit 8 may determine whether to perform the correction for cutting the high gradation, the correction for cutting the low gradation, or the correction for cutting both, or a determination circuit for the determination may be additionally disposed.

Here, each of the image process circuit 4, the liquid crystal drive circuit 5, the backlight unit drive circuit 6, the image signal correction circuit 7, and the main control circuit 8 described above may be disposed as an independent circuit, or two or more circuits may be unified. Further, the image process circuit 4 and (or) the image signal correction circuit 7 may be stored as software in the memory 9, called by the main control circuit 8 when necessary to generate or correct the frame image signal.

Here, in each embodiment described above, the monochromatic image is described as an example; however, a similar crosstalk occurs even in a color image, and it is possible to reduce the crosstalk by means of the same correction method. Besides, as the liquid crystal display device A, the liquid crystal display device, which displays a 3D image by means of a frame sequential method that uses the active shutter glasses, is described as an example; however, this is not limiting. Irrespective of a 3D image and a flat image, the technology of the present invention is widely applicable to liquid crystal display devices that display an image in time division.

Besides, in the above embodiments, as the correction table for correcting the input gradation, the tables indicated by the graphs are described; however, these are not limiting, and a table which shows the input gradation and the corrected input gradation in a one-to-one manner may be used.

Besides, as the case where the liquid crystal panel 1 has the low temperature, the case of being immediately after the power supply of the liquid crystal display device A is turned on (cold start time); however, this is not limiting. Besides, in the above embodiments, the turning-on method of the backlight unit is not especially limited, and it is possible to use any of a line scan, local turning-on control (local dimming), whole surface turning-on and the like, and none of them is limiting.

Industrial Applicability

The present invention is applicable as a display device of apparatuses such as a flat-panel television device, a flat-panel display device, a mobile phone and the like.

Reference Signs List

1 liquid crystal panel
2 backlight unit
3 image signal input portion
4 image process circuit
5 liquid crystal drive circuit
6 backlight unit drive circuit
7 image signal correction circuit
8 main control circuit
9 memory

## Claims

1. A liquid cryst display device rising:

   a backlight unit that includes a light source;
   a liquid crystal panel that displays an image on a front surface by transmitting/Mocking light from the backlight unit;
   an image process unit that generates an image signal which is displayed on the liquid crystal panel; and
   a liquid crystal panel drive unit that based on the image signal, generates a liquid crystal drive signal which controls switching of transmission/blocking performed by the liquid crystal panel;
   the liquid crystal display device comprises a panel temperature obtaining unit that obtains a temperature of the liquid crystal panel; and
   the liquid crystal display device comprises an image signal correction unit that performs a correction to cut a predetermined gradation of the image signal when the temperature of the liquid crystal panel is lower than a temperature during a steady-state operation time of the liquid crystal display device.

2. The liquid crystal display device according to claim 1, wherein
   the image signal correction unit cuts a high gradation of the image signal.

3. The liquid crystal display device according to claim 1 or claim 2, wherein
   the image signal correction unit cuts a low gradation of the image signal.

4. The liquid crystal display device according to claim 1, wherein
   the image signal correction unit, in accordance with the temperature of the liquid crystal panel, determines whether to cut a high gradation, a low gradation or both gradations of the image signal.

5. The liquid crystal display device according to any one of claim 1 to claim 4, wherein
   the liquid crystal signal correction unit uses a bias of the gradation of the image signal as a parameter to determine a gradation to be cut.

6. The liquid crystal display device according to any one of claim 1 to claim 5, wherein
   the image signal correction unit corrects the image signal more considerably when the temperature of the liquid crystal panel is lower.

7. The liquid crystal display device according to any one of claim 1 to claim 6, wherein
   the image signal correction performs the correction of the image signal by means s of a calculation process based on a calculation formula given in advance and the temperature of the liquid crystal panel.

8. The liquid crystal display device according to any one of claim 1 to claim 6, comprising a gradation correction database that includes a gradation correction table, in which a correction amount of the image signal is prepared, for every temperature of the liquid crystal panel; wherein
   the image signal correction unit calls a gradation correction table corresponding to the temperature of the liquid crystal panel from the gradation correction database, refers to the gradation correction table, and corrects the image signal.

9. The liquid crystal display device according to any one of claim 1 to claim 8, further comprising a control unit that when a correction is performed by the image signal correction unit to cut the high gradation of the image signal, performs control to increase brightness of the backlight unit.

10. The liquid crystal display device according to any one of claim 1 to claim 8, further comprising a control unit that when a correction is performed by the image signal correction unit to cut the low gradation of the image signal, performs control to decrease brightness of the backlight unit.

Fig.1

## Fig.2A

10     P1R

10L        10C      10R

10     P1L

10L        10C      10R

## Fig.2B

10

Fig.3A

P2R

10

10L    Bw    10C    10R

P2L

10

10L    Wb    10C    10R

Fig.3B

Wb    Bw

10

CROSSTALK

Fig.4

Fig.5A

CROSS
TALK

z

x

y

255

192

128

64

0

CURRENT IMAGE
(for LEFT EYE)

0
64
128
192
255

PREVIOUS IMAGE
(for RIGHT EYE)

Fig.5B

CROSS
TALK

CURRENT IMAGE
(for LEFT EYE)

PREVIOUS IMAGE
(for RIGHT EYE)

255
192
128
64
0

0
64
128
192
255

z

x

y

## Fig.6

CORRECTED INPUT GRADATION

255

Tb2

32

0

255

INPUT GRADATION

Fig.7

Fig.8

**INTERNATIONAL SEARCH REPORT**

| | International application No. |
|---|---|
| | PCT/JP2011/056600 |

**A. CLASSIFICATION OF SUBJECT MATTER**
*G09G3/36*(2006.01)i, *G02F1/133*(2006.01)i, *G09G3/20*(2006.01)i, *G09G3/34* (2006.01)i

According to International Patent Classification (IPC) or to both national classification and IPC

**B. FIELDS SEARCHED**

Minimum documentation searched (classification system followed by classification symbols)
G09G3/36, G02F1/133, G09G3/20, G09G3/34

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2009-20340 A (Renesas Technology Corp.),<br>29 January 2009 (29.01.2009),<br>paragraphs [0026] to [0097]; fig. 1 to 12<br>& US 2009/0015532 A1 & CN 101388179 A<br>& KR 10-2009-0006776 A | 1-3,6-10<br>4-5 |
| X<br>A | WO 2007/074560 A1 (Sharp Corp.),<br>05 July 2007 (05.07.2007),<br>paragraphs [0027] to [0038]; fig. 1 to 10<br>(Family: none) | 1-3,6-10<br>4-5 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 March, 2011 (31.03.11) | 12 April, 2011 (12.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/056600 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2003-207762 A  (Sharp Corp.),<br>25 July 2003 (25.07.2003),<br>paragraphs [0039] to [0045]; fig. 6 to 8<br>& US 2004/0201564 A1     & US 2004/0263495 A1<br>& EP 1443487 A1          & EP 1443486 A1<br>& WO 2003/041043 A1      & WO 2003/041044 A1<br>& KR 10-2005-0044313 A   & CN 1582464 A<br>& CN 1585966 A | 1-3,6-10<br>4-5 |
| A | JP 2002-268035 A  (Rohm Co., Ltd.),<br>18 September 2002 (18.09.2002),<br>entire text; all drawings<br>(Family: none) | 1-10 |
| A | JP 2001-159753 A  (Seiko Epson Corp.),<br>12 June 2001 (12.06.2001),<br>paragraphs [0028] to [0065]; fig. 1 to 13<br>(Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010091782 A